# EUROPÄISCHE PATENTANMELDUNG

(11) **EP 2 680 344 A1**
(43) Veröffentlichungstag der Anmeldung: **01.01.2014**
(21) Anmeldenummer: 13171402.4
(22) Anmeldetag: 11.06.2013
(51) Int. Cl.: H01M 2/20, H01M 10/04

(54) **Handwerkzeugakkuvorrichtung**

(30) Priorität: 28.06.2012 DE 102012211171
(71) Anmelder: ROBERT BOSCH GMBH, 70442 Stuttgart (DE)
(72) Erfinder: Matthias, Wolf, 70469 Stuttgart (DE); Seidel, Thorsten, 71686 Remseck (DE)

(57) **Zusammenfassung**

Die Erfindung geht aus von einer Handwerkzeugakkuvorrichtung mit zumindest einer ersten, einer zweiten und einer dritten Akkuzelle (12.1 a-12.3a; 12.1 b-12.3b) sowie zumindest einem einteiligen Zellverbinder (14.1a; 14.1 b), der wenigstens die erste Akkuzelle (12.1 a; 12.1b) und die zweite Akkuzelle (12.2a; 12.2b) elektrisch leitend verbindet.

Es wird vorgeschlagen, dass die Handwerkzeugakkuvorrichtung einen flexiblen Zellverbinder (16.1a; 16b) aufweist, der die erste Akkuzelle (12.1a; 12.1b) und die zweite Akkuzelle (12.2a; 12.2b) zumindest mit der dritten Akkuzelle (12.3a; 12.3b) elektrisch leitend verbindet.

## Beschreibung

### Stand der Technik

Es ist bereits eine Handwerkzeugakkuvorrichtung mit zumindest einer ersten, einer zweiten und einer dritten Akkuzelle sowie zumindest einem einteiligen Zellverbinder, der wenigstens die erste Akkuzelle und die zweite Akkuzelle elektrisch leitend verbindet, vorgeschlagen worden.

### Offenbarung der Erfindung

Die Erfindung geht aus von einer Handwerkzeugakkuvorrichtung mit zumindest einer ersten, einer zweiten und einer dritten Akkuzelle sowie zumindest einem einteiligen Zellverbinder, der wenigstens die erste Akkuzelle und die zweite Akkuzelle elektrisch leitend verbindet.

Es wird vorgeschlagen, dass die Handwerkzeugakkuvorrichtung einen flexiblen Zellverbinder aufweist, der die erste Akkuzelle und die zweite Akkuzelle zumindest mit der dritten Akkuzelle elektrisch leitend verbindet. Unter einer "Akkuzelle" soll insbesondere ein Mittel verstanden werden, das dazu vorgesehen ist, eine elektrische Energie aufzunehmen, die Energie chemisch zu speichern und die Energie elektrisch auszugeben. Vorzugsweise sind die Akkuzellen als lithiumbasierte Akkuzellen ausgebildet. Insbesondere soll unter dem Begriff "einteilig" zumindest verstanden werden, dass alle Teile des Zellverbinders stoffschlüssig miteinander verbunden sind. Vorzugsweise ist der Zellverbinder zumindest im Wesentlichen von einem einzelnen Werkstoff gebildet. Vorteilhaft ist der Zellverbinder als ein Blechelement ausgebildet. Insbesondere ist der Zellverbinder in einem Stanzprozess hergestellt. Unter einem "Zellverbinder" soll insbesondere ein Mittel verstanden werden, das in einem Betriebszustand wenigstens zwei Pole, vorzugsweise zwei Pluspole oder zwei Minuspole, unterschiedlicher Akkuzellen niederohmig miteinander koppelt. Insbesondere soll unter der Wendung "elektrisch leitend verbinden" verstanden werden, dass der Zellverbinder zwischen den wenigstens zwei Polen unterschiedlicher Akkuzellen eine Brücke mit einem Widerstand kleiner als 2 Ohm, vorteilhaft kleiner als 0,5 Ohm, besonders vorteilhaft kleiner als 0,2 Ohm, herstellt. Unter dem Begriff "flexibel" soll insbesondere verstanden werden, dass der flexible Zellverbinder in einem Betriebszustand einer Bewegung zumindest eine Kraft entgegensetzt, die weniger als halb so groß, vorteilhaft weniger als ein Viertel so große ist wie eine Kraft, die der einteilige Zellverbinder dieser Bewegung entgegensetzen würde. Vorzugsweise ist der flexible Zellverbinder dazu vorgesehen, eine Bewegung, insbesondere um mehr als 2 mm, vorteilhaft um mehr als 4 mm, besonders vorteilhaft um mehr als 8 mm, der ersten Akkuzelle relativ zu der dritten Akkuzelle unterbrechungsfrei zu ermöglichen. Vorzugsweise werden der einteilige Zellverbinder und der flexible Zellverbinder bei einer Herstellung der Handwerkzeugakkuvorrichtung insbesondere stoffschlüssig miteinander verbunden. Unter "vorgesehen" soll insbesondere speziell ausgelegt und/oder ausgestattet verstanden werden. Durch die erfindungsgemäße Ausgestaltung der Handwerkzeugakkuvorrichtung kann eine Bewegung der Akkuzellen relativ zueinander vorteilhaft ausgeglichen werden ohne ein Risiko, dass eine elektrisch leitende Verbindung unterbrochen wird. Zudem können geringe Produktionskosten durch eine Verwendung des flexiblen Zellverbinders in unterschiedlich aufgebauten Handwerkzeugakkus erreicht werden.

In einer weiteren Ausgestaltung wird vorgeschlagen, dass der flexible Zellverbinder mehrteilig ausgebildet ist, wodurch eine vorteilhafte Flexibilität erreicht werden kann. Unter "mehrteilig" soll insbesondere verstanden werden, dass der Zellverbinder aus mehreren, miteinander verbundenen Teilen besteht. Vorzugsweise sind die Teile in einem betriebsbereiten Zustand formschlüssig, kraftschlüssig und/oder bevorzugt stoffschlüssig miteinander verbunden.

Des Weiteren wird vorgeschlagen, dass der flexible Zellverbinder mehrere Litzen aufweist, wodurch eine besonders vorteilhafte Flexibilität erreicht werden kann. Insbesondere soll unter "mehrere Litzen aufweisen" verstanden werden, dass der flexible Zellverbinder mehrere, vorteilhaft verdrillte, elektrisch leitende Adern aufweist. Alternativ oder zusätzlich könnte der flexible Zellverbinder als ein flaches und deshalb flexibles Band ausgebildet sein.

Ferner wird vorgeschlagen, dass der einteilige Zellverbinder und der flexible Zellverbinder miteinander verschweißt sind, wodurch eine besonders stabile Verbindung möglich ist. Insbesondere soll unter "verschweißt" verstanden werden, dass die Zellverbinder zum Erreichen einer stoffschlüssigen Verbindung bei einer Montage teilweise bis über einen Schmelzpunkt erhitzt werden. Alternativ oder zusätzlich könnten die Zellverbinder verlötet sein.

Zudem wird vorgeschlagen, dass die Handwerkzeugakkuvorrichtung zumindest einen zweiten einteiligen Zellverbinder und wenigstens eine vierte Akkuzelle umfasst, wobei der zweite einteilige Zellverbinder die dritte Akkuzelle und die vierte Akkuzelle verbindet, wodurch ein besonders leistungsfähiger Handwerkzeugakku bereitgestellt werden kann.

Weiterhin wird vorgeschlagen, dass der flexible Zellverbinder mit dem ersten einteiligen Zellverbinder und dem zweiten einteiligen Zellverbinder elektrisch leitend verbunden ist, wodurch eine einfache Montage möglich ist. Insbesondere ist der flexible Zellverbinder nur mit dem ersten einteiligen Zellverbinder und dem zweiten einteiligen Zellverbinder direkt verbunden.

In einer vorteilhaften Ausbildung der Erfindung wird vorgeschlagen, dass zumindest die erste Akkuzelle und die zweite Akkuzelle parallel verschaltet sind, wodurch eine große abrufbare Stromstärke erreicht werden kann.

Des Weiteren wird vorgeschlagen, dass der flexible Zellverbinder zumindest im Wesentlichen aus Kupfer besteht, wodurch besonders geringe Verluste erreicht werden können. Unter der Wendung "im Wesentlichen aus Kupfer bestehen" soll insbesondere verstanden werden, dass der Zellverbinder mehr als 50 %, vorteilhaft mehr als 90 % Kupfer aufweist.

Ferner wird ein Verfahren zur Herstellung eines erfindungsgemäßen Handwerkzeugakkus vorgeschlagen, wobei die dritte Akkuzelle relativ zu der ersten und der zweiten Akkuzelle während der Montage verschoben wird, wodurch eine vorteilhafte Form des Handwerkzeugakkus konstruktiv einfach möglich ist. Unter einer "Montage" soll insbesondere ein Vorgang verstanden werden, bei dem die Akkuzelle in ein Akkugehäuse eingebaut wird. Insbesondere soll unter "verschoben werden" verstanden werden, dass auf die dritte Akkuzelle bei dem Einbau eine Kraft bewirkt wird, die die dritte Akkuzelle relativ zu der ersten und der zweiten Akkuzelle bewegt und dadurch den flexiblen Zellverbinder verformt.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Handwerkzeugakku mit einer erfindungsgemäßen Handwerkzeugakkuvorrichtung in einer ersten Schnittdarstellung,
- Fig. 2: den Handwerkzeugakku aus Figur 1 in einer zweiten Schnittdarstellung,
- Fig. 3: den Handwerkzeugakku aus Figur 1 in einer Seitenansicht,
- Fig. 4: einen Teil eines Handwerkzeugakkus mit einem weiteren Ausführungsbeispiel einer erfindungsgemäßen Handwerkzeugakkuvorrichtung in einer perspektivischen Darstellung und
- Fig. 5: die Handwerkzeugakkuvorrichtung aus Figur 4 in einer perspektivischen Darstellung.

### Beschreibung der Ausführungsbeispiele

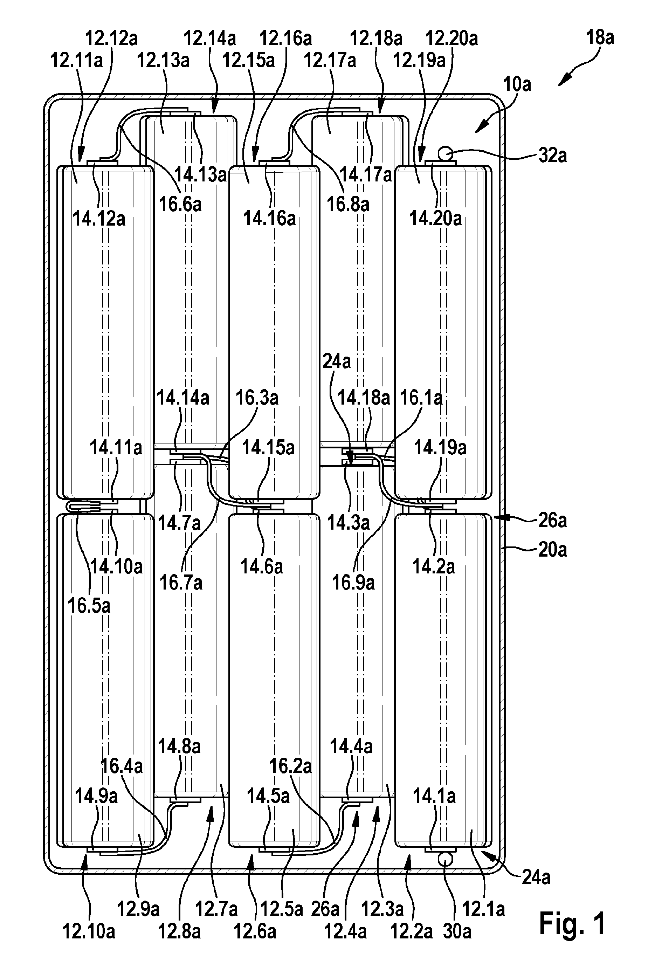

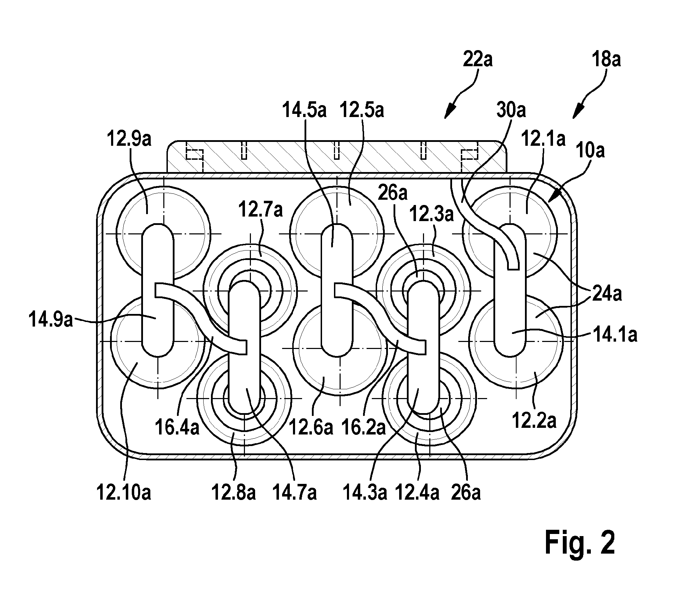

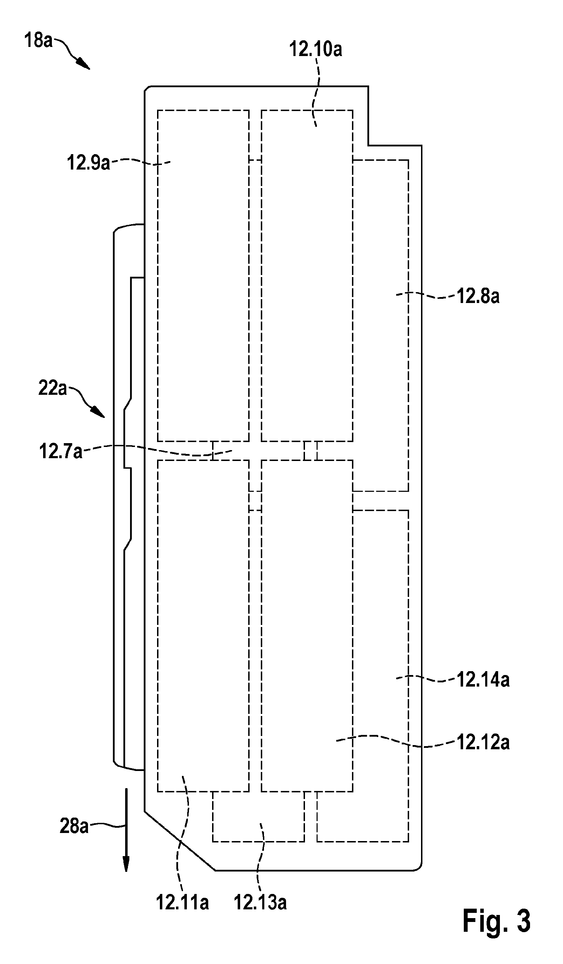

Die Figuren 1 bis 3 zeigen einen Handwerkzeugakku 18a mit einer erfindungsgemäßen Handwerkzeugakkuvorrichtung 10a, einem Akkugehäuse 20a, einem Handwerkzeugkoppelmittel 22a und einer hier nicht näher dargestellten Akkuelektronik. Das Handwerkzeugkoppelmittel 22a ist dazu vorgesehen, das Akkugehäuse 20a mit einem hier nicht näher dargestellten Handwerkzeug mechanisch und elektrisch zu verbinden. Die Verbindung ist von dem Bediener werkzeuglos lösbar ausgebildet. Das Akkugehäuse 20a umschließt die Handwerkzeugakkuvorrichtung 10a.

Die Handwerkzeugakkuvorrichtung 10a umfasst Akkuzellen 12.1a-12.20a, einteilige Zellverbinder 14.1a-14.20a, flexible Zellverbinder 16.1a-16.9a und, hier nicht näher dargestellt, einen Zellhalter. Der Zellhalter fixiert die Akkuzellen 12.1 a-12.20a in dem Akkugehäuse 20a. Die Akkuzellen 12.1 a-12.20a weisen jeweils einen Minuspol 24a und einen Pluspol 26a auf. Der Minuspol 24a und der Pluspol 26a der Akkuzellen 12.1 a-12.20a sind jeweils auf gegenüberliegenden Seiten der Akkuzellen 12.1 a-12.20a angeordnet. Eine Gerade, die den Minuspol 24a und den Pluspol 26a einer der Akku-zellen 12.1a-12.20a schneidet, ist im Wesentlichen parallel zu einer Befestigungsrichtung 28a des Handwerkzeugkoppelmittels 22a ausgerichtet. Andere, dem Fachmann als sinnvoll erscheinende Formen, Anordnungen und/oder Ausrichtungen von Akkuzel-len sind möglich.

Die Handwerkzeugakkuvorrichtung 10a umfasst in diesem Ausführungsbeispiel zwanzig Akkuzellen 12.1 a-12.20a. Die Akkuzellen 12.1 a-12.20a sind als lithiumbasierte Ak-kuzellen ausgebildet. Die einteiligen Zellverbinder 14.1 a-14.20a bestehen aus einem Blech. Jeweils zwei der einteiligen Zellverbinder 14.1a-14.20a schalten zwei der Akku-zellen 12.1a-12.20a parallel. Ein erster der einteiligen Zellverbinder 14.1 a und ein zweiter der einteiligen Zellverbinder 14.2a schalten eine erste der Akkuzellen 12.1 a und eine zweite der Akkuzellen 12.2a parallel. Der erste Zellverbinder 14.1 a verbindet den Minuspol 24a der ersten Akkuzelle 12.1 a mit dem Minuspol 24a der zweiten Akkuzelle 12.2a elektrisch leitend. Der zweite Zellverbinder 14.2a verbindet den Pluspol 26a der ersten Akkuzelle 12.1 a mit dem Pluspol 26a der zweiten Akkuzelle 12.2a elektrisch leitend. Ein dritter der einteiligen Zellverbinder 14.3a und ein vierter der einteiligen Zellverbinder 14.4a schalten eine dritte der Akkuzellen 12.3a und eine vierte der Akkuzel-len 12.4a parallel. Diesem Muster entsprechend sind die anderen der einteiligen Zellverbinder 14.5a-14.20a und die anderen der Akkuzellen 12.5a-12.20a verschaltet. Andere, dem Fachmann als sinnvoll erscheinende Parallelschaltungen und/oder Serienschaltungen von Akkuzellen sind möglich.

Die flexiblen Zellverbinder 16.1 a-16.9a verbinden jeweils zwei der einteiligen Zellver-binder 14.1 a-14.20a. Dabei ist jeder der einteiligen Zellverbinder 14.1 a-14.20a mit genau einem der flexiblen Zellverbinder 16.1 a-16.9a verbunden. Ein erster der flexiblen Zellverbinder 16.1 a verbindet den ersten der einteiligen Zellverbinder 14.1 a mit dem zweiten der einteiligen Zellverbinder 14.2a elektrisch leitend. Ein zweiter der flexiblen Zellverbinder 16.2a verbindet den dritten der einteiligen Zellverbinder 14.3a mit dem vierten der einteiligen Zellverbinder 14.4a elektrisch leitend. Diesem Muster entsprechend sind die anderen der flexiblen Zellverbinder 16.5a-16.9a und die anderen der einteiligen Zellverbinder 14.5a-14.20a verschaltet. Die flexiblen Zellverbinder 16.1a-16.9a schalten somit die jeweils zwei parallel verbundenen Akkuzellen 12.1a-12.20a in Reihe. Andere, dem Fachmann als sinnvoll erscheinende Reihenschaltungen von Akkuzellen sind möglich. Die flexiblen Zellverbinder 16.1 a-16.9a sind mit jeweils zwei der einteiligen Zellverbinder 14.1 a-14.20a verschweißt.

Die flexiblen Zellverbinder 16.1 a-16.9a sind mehrteilig ausgebildet. Die flexiblen Zell-verbinder 16.1a-16.9a weisen mehrere Litzen auf. Die Litzen sind miteinander verwoben. Die Litzen sind durch das Verschweißen der flexiblen Zellverbinder 16.1 a-16.9a mit den einteiligen Zellverbindern 14.1a-14.20a verbunden. Die flexiblen Zellverbinder 16.1 a-16.9a bestehen aus Kupfer. Die Akkuzellen 12.1 a-12.20a sind mittels Kabeln 30a, 32a mit der Akkuelektronik verbunden. Alternativ könnten die Kabel 30a, 32a die Akkuzellen 12.1a-12.20a direkt mit dem Handwerkzeugkoppelmittel 22a verbinden. Statt der Kabel 30a, 32a könnte der Handwerkzeugakku 18a zur Verbindung der Akku-zellen 12.1 a-12.20a mit der Akkuelektronik und/oder dem Handwerkzeugkoppelmittel 22a ebenfalls flexible Verbinder aufweisen.

Bei der Herstellung des Handwerkzeugakkus 18a werden jeweils parallel geschaltete Akkuzellen 12.1a-12.20a relativ zu anderen parallel geschalteten Akkuzellen 12.1a-12.20a während der Montage verschoben. Dabei wird ein flexibler Zellverbinder 16.1 a-16.9a, der diese parallel geschalteten Akkuzellen 12.1 a-12.20a in Reihe schaltet, verformt. In einem betriebsbereiten Zustand sind die Akkuzellen 12.1a-12.20a auf einer Ebene, die senkrecht zu einer axialen Richtung der Akkuzellen 12.1 a-12.20a ausgerichtet ist, um etwa einen Radius der Akkuzellen 12.1a-12.20a in einer Haupterstreckungsrichtung der einteiligen Zellverbinder 14.1a-14.20a versetzt angeordnet. Parallel geschaltete Akkuzellen 12.1a-12.20a sind auf dieser Ebene relativ zu benachbart angeordneten parallel geschalteten Akkuzellen 12.1a-12.20a in axialer Richtung verschoben angeordnet. Parallel geschaltete Akkuzellen 12.1a-12.20a, die näher an dem Handwerkzeugkoppelmittel 22a angeordnet sind, sind in axialer Richtung relativ zu parallel geschalteten Akkuzellen 12.1 a-12.20a versetzt angeordnet, die weiter von dem Handwerkzeugkoppelmittel 22a entfernt angeordnet sind.

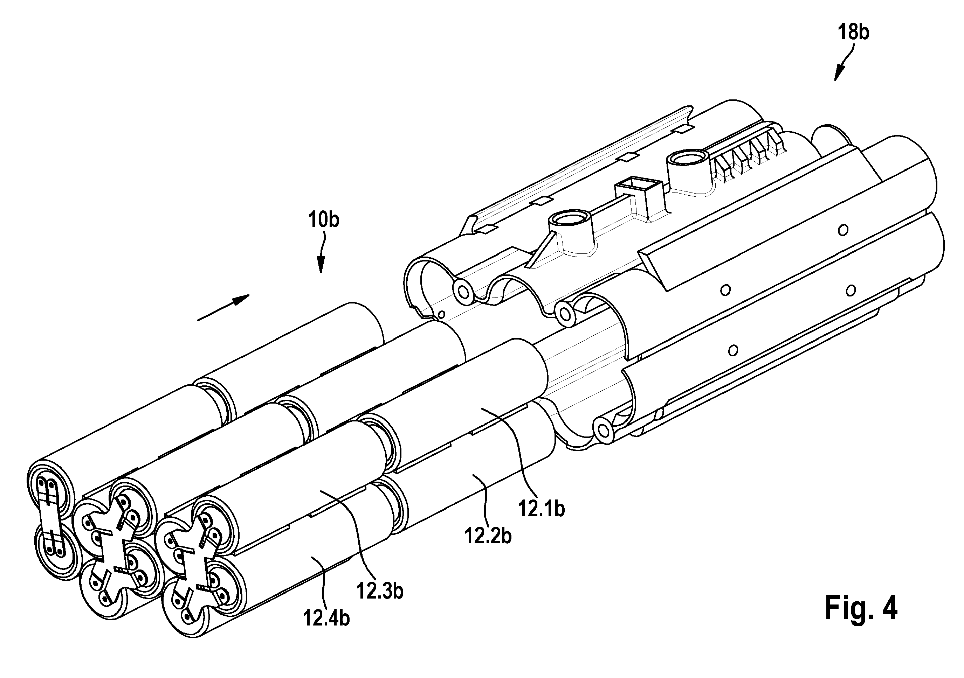

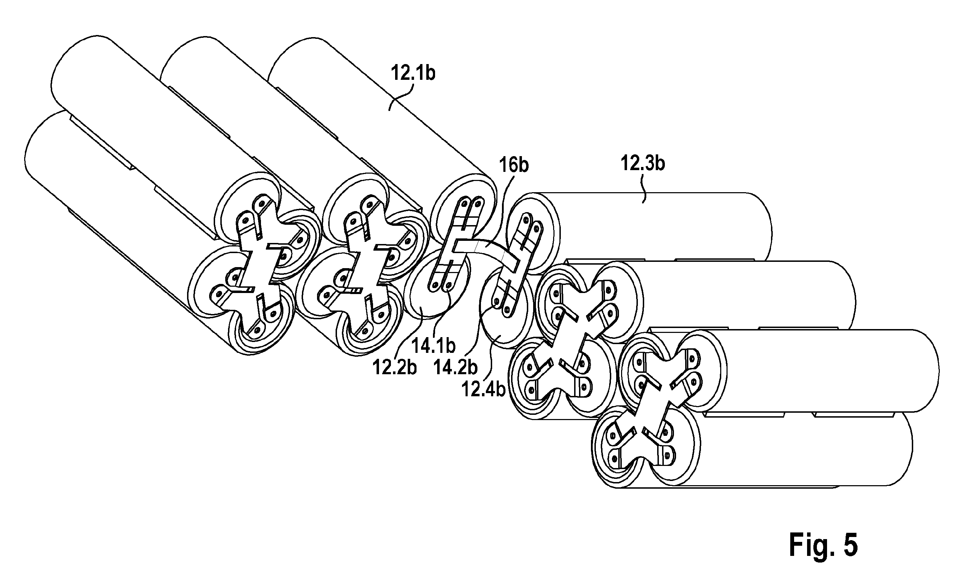

In den Figuren 4 und 5 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbei-spielen der Figuren 4 und 5 ist der Buchstabe a durch den Buchstaben b ersetzt.

Die Figuren 4 und 5 zeigen einen Teil eines Handwerkzeugakkus 18b mit einer erfindungsgemäßen Handwerkzeugakkuvorrichtung 10b. Die Handwerkzeugakkuvorrichtung 10b umfasst neben einer ersten Akkuzelle 12.1 b, einer zweiten Akkuzelle 12.2b, einer dritten Akkuzelle 12.3b und einer vieren Akkuzelle 12.4b sechzehn weitere Akku-zellen. Des Weiteren umfasst die Handwerkzeugakkuvorrichtung 10b einen ersten einteiligen Zellverbinder 14.1 b, einen zweiten einteiligen Zellverbinder 14.2b und weitere einteilige Zellverbinder. Der erste einteilige Zellverbinder 14.1 b verbindet die erste Ak-kuzelle 12.1 b und die zweite Akkuzelle 12.2b elektrisch leitend. Der erste einteilige Zellverbinder 14.1 b schaltet die erste Akkuzelle 12.1 b und die zweite Akkuzelle 12.2b auf einer Seite parallel. Der zweite einteilige Zellverbinder 14.2b verbindet die dritte Akkuzelle 12.3b und die vierte Akkuzelle 12.4b elektrisch leitend miteinander. Der zweite einteilige Zellverbinder 14.2b schaltet die dritte Akkuzelle 12.3b und die vierte Akkuzelle 12.4b auf einer Seite parallel.

Die Handwerkzeugakkuvorrichtung 10b umfasst einen flexiblen Zellverbinder 16b, der die erste Akkuzelle 12.1 b und die zweite Akkuzelle 12.2b mit der dritten Akkuzelle 12.3b und der vierten Akkuzelle 12.4b elektrisch leitend verbindet. Die jeweils zwei der weiteren Akkuzellen werden von den weiteren einteiligen Zellverbindern parallelgeschaltet und elektrisch leitend verbunden. Die jeweils zwei Akkuzellen sind mit den anderen Akkuzellen in Reihe geschaltet. Die Akkuzellen werden bei einer Montage so verschoben, dass in einem montierten Betriebszustand jeweils zumindest zwei Akkuzellen in axialer Richtung hintereinander angeordnet sind. Der flexible Zellverbinder 16b wird bei einer Montage um zumindest im Wesentlichen 180 Grad gebogen.

## Patentansprüche

1. Handwerkzeugakkuvorrichtung mit zumindest einer ersten, einer zweiten und einer dritten Akkuzelle (12.1 a-12.3a; 12.1b-12.3b) sowie zumindest einem einteiligen Zellverbinder (14.1 a; 14.1 b), der wenigstens die erste Akkuzelle (12.1 a; 12.1 b) und die zweite Akkuzelle (12.2a; 12.2b) elektrisch leitend verbindet, **gekennzeichnet durch** einen flexiblen Zellverbinder (16.1a; 16b), der die erste Akkuzelle (12.1a; 12.1 b) und die zweite Akkuzelle (12.2a; 12.2b) zumindest mit der dritten Akkuzelle (12.3a; 12.3b) elektrisch leitend verbindet.

2. Handwerkzeugakkuvorrichtung nach Anspruch 1, **dadurch gekennzeichnet, dass** der flexible Zellverbinder (16.1 a; 16b) mehrteilig ausgebildet ist.

3. Handwerkzeugakkuvorrichtung nach Anspruch 1 oder 2, **dadurch gekennzeichnet, dass** der flexible Zellverbinder (16.1a; 16b) mehrere Litzen aufweist.

4. Handwerkzeugakkuvorrichtung nach einem der vorhergehenden Ansprüche, **dadurch gekennzeichnet, dass** der einteilige Zellverbinder (14.1a; 14.1b) und der flexible Zellverbinder (16.1 a; 16b) miteinander verschweißt sind.

5. Handwerkzeugakkuvorrichtung nach einem der vorhergehenden Ansprüche, **gekennzeichnet durch** zumindest einen zweiten einteiligen Zellverbinder (14.2a; 14.2b) und wenigstens eine vierte Akkuzelle (12.4a; 12.4b), wobei der zweite einteilige Zellverbinder (14.2a; 14.2b) die dritte Akkuzelle (12.3a; 12.3b) und die vierte Akkuzelle (12.4a; 12.4b) verbindet.

6. Handwerkzeugakkuvorrichtung nach Anspruch 5, **dadurch gekennzeichnet, dass** der flexible Zellverbinder (16.1 a; 16b) mit dem ersten einteiligen Zellverbinder (14.1 a; 14.1 b) und dem zweiten einteiligen Zellverbinder (14.2a; 14.2b) elektrisch leitend verbunden ist.

7. Handwerkzeugakkuvorrichtung nach einem der vorhergehenden Ansprüche, **dadurch gekennzeichnet, dass** zumindest die erste Akkuzelle (12.1a; 12.1b) und die zweite Akkuzelle (12.2a; 12.2b) parallel verschaltet sind.

8. Handwerkzeugakkuvorrichtung nach einem der vorhergehenden Ansprüche, **dadurch gekennzeichnet, dass** der flexible Zellverbinder (16.1 a; 16b) zumindest im Wesentlichen aus Kupfer besteht.

9. Handwerkzeugakku mit einer Handwerkzeugakkuvorrichtung (10a; 10b) nach einem der vorhergehenden Ansprüche.

10. Verfahren zur Herstellung eines Handwerkzeugakkus (18a; 18b) nach Anspruch 9, wobei die dritte Akkuzelle (12.3a; 12.3b) relativ zu der ersten Akkuzelle (12.1a; 12.1 b) und der zweiten Akkuzelle (12.2a; 12.2b) während der Montage verschoben werden.
